Europäisches Patentamt

European Patent Office

Office européen des brevets

(19)

(11) Publication number: **0 048 607**

**A1**

(12) # EUROPEAN PATENT APPLICATION

(21) Application number: **81304310.6**

(22) Date of filing: **18.09.81**

(51) Int. Cl.³: **G 01 F 23/14**
**D 06 F 33/00**

(30) Priority: **19.09.80 GB 8030318**

(43) Date of publication of application:
**31.03.82 Bulletin 82/13**

(84) Designated Contracting States:
**DE FR IT SE**

(71) Applicant: **EATON S.A.M.**
**14 Boulevard du Bord de Mer Boîte Postale 84**
**Monaco(MC)**

(72) Inventor: **Buffet, Jean Claude**
**18 Av. de Fontvieille**
**Principauté de Monaco(MC)**

(74) Representative: **Wright, Peter David John et al,**
**R.G.C. Jenkins & Co. Chancery House 53-64 Chancery**
**Lane**
**London WC2A 1QU(GB)**

(54) Washing machine level detector.

(57) A detector (10) for detecting the level (12) of water in a washing machine (2) comprises a diaphragm (14) connected by a conduit (16) to a pneumatic pressure sensor (18). As the water level (12) rises, the pressure on the diaphragm (14) increases, thereby causing an increase in the pneumatic pressure in the conduit (16) which is sensed by the pressure sensor (18). The conduit (16) includes an earthed, electrically conductive portion (20) to ensure that, in the event that water leaks through or around the diaphragm (14) and reaches any electrical circuitry of the pressure sensor (18), the electrical potential of the water in the machine (2) is not raised to a dangerous level.

Fig. 1.

EP 0 048 607 A1

- 1 -

TITLE

WASHING MACHINE LEVEL DETECTOR

TECHNICAL FIELD

This invention relates to a detector for detecting the level of water in a washing machine, such as a dishwashing machine or a clothes-washing machine.

BACKGROUND ART

Such detectors are often used to control electrical circuits, for example to shut off a water supply in response to the water reaching a predetermined level. Some detectors comprise a diaphragm on one side of which the pressure of water acts, so that an increase in the pressure caused by a rise in the level of water causes an increase in the pneumatic pressure on the other side of the diaphragm. A conduit connects the diaphragm to a pneumatic pressure sensor, which thereby senses the rise in water level.

It is, however, possible that slight leakages may arise through or around the diaphragm, as a result of which water may reach the pressure sensor. The sensor has electrical contacts, and it is therefore possible that the electrical potential of the water in the machine may be raised to a dangerous level if any water reaches the electrical circuitry of the pressure sensor.

## SUMMARY OF INVENTION

It is an object of the present invention to reduce the risk of such dangerous electrical potentials arising.

In accordance with the invention there is provided a detector for detecting the level of water in a washing machine, comprising a sensor for sensing a pneumatic pressure which, during use of the detector in the washing machine, varies when the level of water in the machine rises, characterised in that the detector includes means for electrically earthing water which has entered the space in which said pneumatic pressure varies.

Thus, it is ensured that even if water reaches the electrical circuitry of the pressure sensor, such water is earthed and therefore cannot be raised to a dangerous electrical potential.

The detector may have a conduit communicating the pneumatic pressure to the sensor, and electrically conductive means may be disposed in, or form at least part of, the conduit and be electrically connected, during use, to earth.

The conduit may have a part which is formed by a metal tube to which a flange is attached for enabling the tube to be connected to earth. The flange may be provided with a hole so that it can be fixed, e.g. by a screw, to an earthed structural part of the washing machine. Alternatively, the flange may take the form of a standard spade connection, for electrically connecting it to earth.

In another embodiment, the metal tube may extend through an earthed structure, and may be so shaped that it can be mechanically fixed to and electrically connected to the surrounding structure.

## DESCRIPTION OF DRAWINGS:

Figure 1 is a schematic elevation of a dishwashing machine having a water level detector in accordance with the invention;

Figures 2 and 3 are detailed views showing the main part of one embodiment of a detector in accordance with the invention, Figure 2 being an elevation showing part of the conduit and the pressure sensor of the detector, and Figure 3 being a perspective view of a portion of the conduit;

Figure 4 is a view similar to that of Figure 3 but showing a different version of the conduit portion; and

Figure 5 shows another embodiment of a detector in accordance with the invention.

## DESCRIPTION OF SPECIFIC EMBODIMENTS .

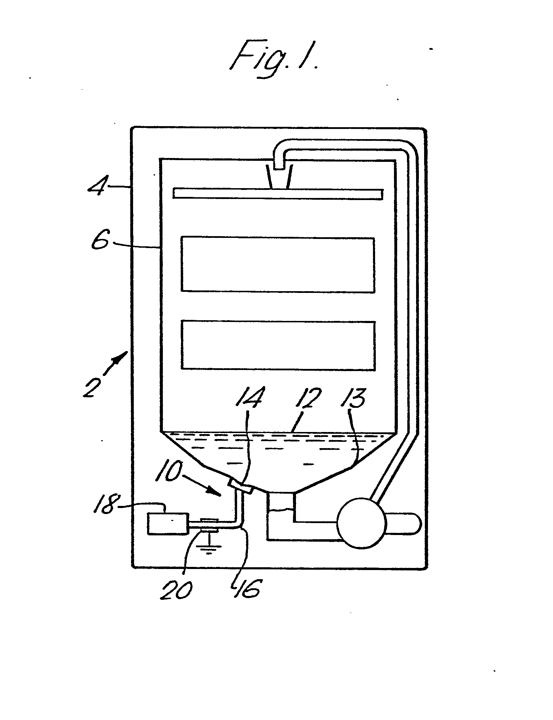

Figure 1 shows a washing machine 2 having a housing 4 in which a tank 6 is supported. A detector indicated at 10 is provided to generate a signal when the level, indicated at 12, of water in the sump 13 at the bottom of the tank 6 reaches a predetermined value. Except for the level detector 10, the dishwashing machine 2 is conventional and further description is therefore deemed unnecessary. It should be noted that the dishwashing machine could be of any alternative type.

The detector 10 comprises a diaphragm 14, one side of which is subjected to the pressure of water in the tank 6. The illustrated portion of the diaphragm is merely diagrammatic, and it may in fact be at any suitable location. The other side of the diaphragm is connected by a pneumatic conduit 16 to a pressure sensor 18. The pressure sensor 18 is in fact a switch which generates a signal when the pneumatic pressure in the conduit 16 rises above a certain value which corresponds to the predetermined water level in the tank 6.

The conduit 16 has a portion 20 which is electrically conductive. The portion 20 is connected to earth, either by a direct electrical connection, or by being fixed to an earthed structure attached to or forming part of the housing 4.

Thus, even if water leaks through or around the diaphragm 14 and reaches the electrical circuitry of the pressure sensor 18, no dangerous electrical potential can reach the water in the tank 6 because of the earthed portion of the conduit 16.

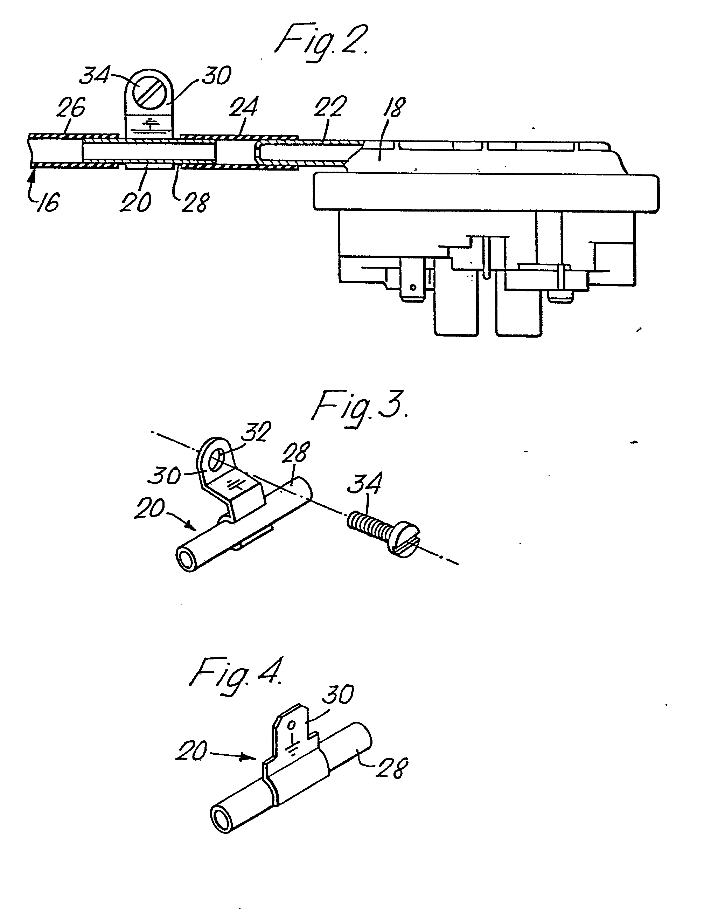

In Figures 2 and 3, items corresponding to those shown in Figure 1 are designated by like reference numbers.

The pressure switch 18 has a plastics housing and an inlet tube 22 forming part of the conduit 16 leading to the diaphragm (not shown). The rest of the conduit is formed by a first hose portion 24, the electrically conductive portion 20, and a second hose portion 26. The hose portions are made of insulative material, preferably plastics. The electrically conductive portion 20 includes a metal tube 28 the ends of which fit into adjacent ends of the first and second hose portions 24 and 26. A flange 30 is attached to the tube 28, e.g. by welding. Flange 30 is provided with a hole 32 by means of which the flange can be fastened to an earthed, structural portion of the housing of the washing machine, e.g. by means of a screw such as that indicated at 34.

Thus, even if water manages to reach the pressure switch 18, it is ensured that the water in the tub is not raised to a dangerously high electrical potential because of the provision of the earthed, electrically

- 6 -

conducting portion 20 of the conduit 16.

As shown in Figure 4, the flange 30 of the electrically conductive portion 20 may alternatively be formed by a standard spade terminal for receiving an electrical connector to connect the flange to earth.

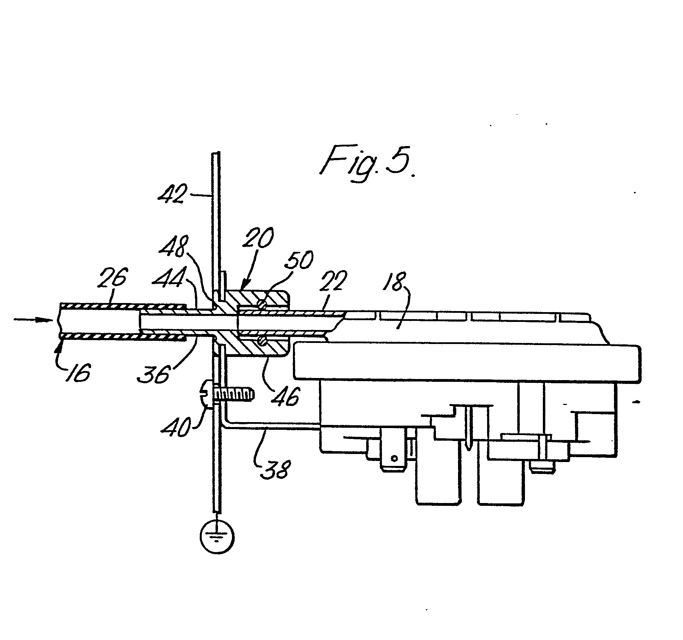

In the embodiment of Figure 5, the conduit 16 comprises a hose 26 which is connected to the diaphragm (not shown), as in the embodiment of Figures 2 and 3, the inlet tube 22 of the pressure switch 18, and the electrically conductive portion 20, which in this case takes the form of a metal (e.g. brass) tube 36 fitted directly onto the inlet tube 22.

A fixing bracket 38 made of electrically conductive material is fastened by two screws, one of which is indicated at 40, to an earthed wall 42 of the washing machine. The pressure sensor 18 is secured to the bracket 38, e.g. by a self-tapping screw (not shown). The bracket 38 and the wall 42 both have holes through which the metal tube 36 forming the electrically conductive portion 20 of the conduit 16 extends.

The metal tube 36 has a relatively small diameter end portion 44 which fits in the hose 26 and a relatively large diameter end portion 46 which fits over the inlet tube 22 of the pressure switch 18. The metal tube 36 is held in position with respect to the bracket 38 by the gripping of the edge of the aperture in the bracket between the large diameter portion 46 of the tube and an integral, outwardly-extending annular flange 48 thereof. This also electrically connects the tube 36 to the earthed bracket.

An "O"-ring 50 ensures an hermetic seal between the metal tube 36 and the inlet tube 22 of the pressure switch 18.

The invention is particularly useful if the pressure sensor has a plastics housing, as in this case the housing cannot itself be earthed.

Embodiments of the invention have been described in connection with dishwashing machines, but the invention is also applicable to other kinds of washing machine, such as clothes washing machines in which the invention is particularly useful if the tub of the machine is not electrically conductive and therefore cannot be earthed.

CLAIMS:

1. A detector for detecting the level (12) of of water in a washing machine (2), the detector (10) comprising a sensor (18) for sensing a pneumatic pressure which, during use of the detector (10) in the washing machine (2), varies when the level (12) of water rises, characterised in that the detector (10) includes means (20) for electrically earthing water which has entered the space in which said pneumatic pressure varies.

2. A detector as claimed in Claim 1, including a conduit (16) communicating with said pressure sensor (18), said earthing means comprising electrically conductive means (20) disposed in, or forming at least part of, the conduit (16) and electrically connected during use to earth, so as electrically to earth water which has entered the conduit (16).

3. A detector as claimed on Claim 2, wherein the electrically conductive means (20) comprises a metal tube (28) to which has been fixed means (30) for electrically earthing the tube (28).

4. A detector as claimed in Claim 3, wherein the earthing means comprises a flange (30) having an aperture (32) permitting the flange (30) to be mechanically fixed to and electrically connected to an earthed component of the washing machine (2).

5. A detector as claimed in Claim 3, wherein the earthing means comprises a standard electrical terminal (30) fixed to the tube (28).

6. A detector as claimed in Claim 5, wherein the terminal (30) is a spade terminal.

7. A detector as claimed in Claim 2, wherein the electrically conductive means (20) comprises a metal tube (36) insertable through an aperture in an earthed component (38) of the washing machine (2), and having an integrally formed flange (48) by means of which the tube (36) can be attached to the edge of the aperture.

8. A washing machine having a water level detector as claimed in any preceding claim.

Fig. 1.

Fig.2.

Fig.3.

Fig.4.

0048607

Fig.5.

| European Patent Office | EUROPEAN SEARCH REPORT | Application number |
|---|---|---|
| | | EP 81304310.6 |

## DOCUMENTS CONSIDERED TO BE RELEVANT

| Category | Citation of document with indication, where appropriate, of relevant passages | Relevant to claim |
|---|---|---|
| | No relevant documents have been disclosed. | |

**CLASSIFICATION OF THE APPLICATION (Int. Cl.³)**

G 01 F 23/14

D 06 F 33/00

**TECHNICAL FIELDS SEARCHED (Int. Cl.³)**

G 01 F 23/00

D 06 F 33/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| X | The present search report has been drawn up for all claims |
|---|---|

| Place of search | Date of completion of the search | Examiner |
|---|---|---|
| VIENNA | 28-12-1981 | STÖGER |